# EUROPÄISCHE PATENTANMELDUNG

(11) **EP 3 905 118 A1**
(43) Veröffentlichungstag der Anmeldung: **03.11.2021**
(21) Anmeldenummer: 21169047.4
(22) Anmeldetag: 19.04.2021
(51) Int. Cl.: G06K 9/00

(54) **KAPAZITIVER FINGERABDRUCKSENSOR, VERFAHREN ZUR ERFASSUNG EINES FINGERABDRUCKS UND WERT- ODER SICHERHEITSDOKUMENT**

(30) Priorität: 27.04.2020 DE 102020205299
(71) Anmelder: Bundesdruckerei GmbH, 10969 Berlin (DE)
(72) Erfinder: Tietke, Markus, 12439 Berlin (DE); Waldmüller-Littke, Jens, 12683 Berlin (DE); Kraus, Micha, 10827 Berlin (DE); Bastian, Paul, 10243 Berlin (DE); Fischer, Jörg, 10317 Berlin (DE); Morgner, Frank, 15537 Grünheide (DE); Trölenberg, Stefan, 15749 Mittenwalde OT Ragow (DE)
(74) Vertreter: Zucker, Volker

(57) **Zusammenfassung**

Die Erfindung betrifft einen kapazitiven Fingerabdrucksensor (1), der mindestens ein Sensor-Array (2), mindestens eine Referenzelektrode (3) und mindestens eine Auswerteelektronik (4) aufweist, wobei die Auswerteelektronik (4) derart ausgebildet ist, Sensor-Pixelwerte einer ersten Messung mit einer ersten Referenzspannung an der Referenzelektrode (3) auszulesen und Sensor-Pixelwerte einer zweiten Messung mit einer zweiten Referenzspannung auszulesen, wobei mindestens die zweite Referenzspannung eine Wechselspannung ist, wobei die Auswertelektronik (4) weiter derart ausgebildet ist, mindestens ausgewählte Sensor-Pixelwerte der ersten und zweiten Messung hinsichtlich der Helligkeit zu vergleichen, wobei die Helligkeitsdifferenz mit mindestens einem Schwellwert verglichen wird und wobei bei einer Helligkeitsdifferenz kleiner dem Schwellwert ein Alarmsignal erzeugt wird, ein Verfahren zur Erfassung eines Fingerabdrucks sowie ein Wert- oder Sicherheitsdokument.

## Beschreibung

Die Erfindung betrifft einen kapazitiven Fingerabdrucksensor, ein Verfahren zur Erfassung eines Fingerabdrucks und ein Wert- oder Sicherheitsdokument mit einem solchen kapazitiven Fingerabdrucksensor.

Aktuell bestehen aktive kapazitive Fingerabdrucksensoren aus einem Sensor-Array und einer umlaufenden Referenzelektrode. Das Sensor-Array stellt dabei die Fläche des Fingerabdrucksensors mit der entsprechenden Auflösung dar. Typische Werte sind hier Sensorflächen von 1 cm x 1 cm und Auflösungen von ca.190 dpi. Die Auflösung eines Fingerabdrucksensors ist wichtig, um ein genaues Bild zu erhalten.

Die Referenzelektrode stellt die elektrische Spannung für die Aufnahme der Fingerabdruckbilder durch den Fingerabdrucksensor zur Verfügung. Die Größe der Spannung spielt eine wichtige Rolle. Trockene Finger benötigen eine höhere Spannung als feuchte Finger. Grund hierfür ist der elektrische Widerstand des Fingers / der Haut. Aktuell arbeiten Fingerabdrucksensoren mit einer festen Gleichspannung, und über eine interne Schaltung wird entsprechend das Fingerabdruckbild verstärkt oder gedämpft. Wichtig ist, aus dem Bild kann kein Rückschluss auf die Eigenschaften des Fingers gezogen werden. Anhand der Bilder und der internen Schaltung kann nur ein Rückschluss auf den elektrischen Widerstand gezogen werden. Das bedeutet, man weiß, ob der Finger feucht oder trocken ist. Es könnte auch sein, dass es sich bei dem Finger um eine Nachbildung aus Kunststoff, Latex, Holzleim oder ähnliches handelt. Aktuell probiert man, die Nachbildungen anhand von komplexen Softwarealgorithmen nach der Bildaufnahme zu detektieren.

Aus der US 5 940 526 A ist ein kapazitiver Fingerabdrucksensor bekannt, der ein Sensor-Array, eine Referenzelektrode und eine Auswerteelektronik aufweist. An die Referenzelektrode wird dabei eine Wechselspannung angelegt, deren Frequenz im Bereich von 1 KHz -1MHz liegt. Dabei wird die Impedanz bestimmt, um lebendes Gewebe von künstlichen Nachbildungen zu unterscheiden. Dabei wird davon ausgegangen, dass die Impedanz eines lebenden Objektes einen Phasenwinkel zwischen 10 - 60 ° aufweist. Der Erfindung liegt das technische Problem zugrunde, einen kapazitiven Fingerabdrucksensor zu schaffen, der eine einfache Erfassung von künstlichen Nachbildungen eines Fingers aufweist. Ein weiteres technisches Problem ist das zur Verfügung stellen eines geeigneten Verfahrens sowie die Schaffung eines Wert- oder Sicherheitsdokumentes.

Die Lösung des technischen Problems ergibt sich durch einen kapazitiven Fingerabdrucksensor mit den Merkmalen des Anspruchs 1, ein Verfahren mit den Merkmalen des Anspruchs 7 sowie ein Wert- oder Sicherheitsdokument mit den Merkmalen des Anspruchs 8. Weitere vorteilhafte Ausgestaltungen der Erfindung ergeben sich aus den Unteransprüchen.

Hierzu weist der kapazitive Fingerabdrucksensor mindestens ein Sensor-Array, mindestens eine Referenzelektrode und mindestens eine Auswerteelektronik auf. Dabei ist die Auswerteelektronik derart ausgebildet, Sensor-Pixelwerte einer ersten Messung mit einer ersten Referenzspannung an der Referenzelektrode auszulesen und Sensor-Pixelwerte einer zweiten Messung mit einer zweiten Referenzspannung an der Referenzelektrode auszulesen, wobei mindestens die zweite Referenzspannung eine Wechselspannung ist. Weiter ist die Auswerteelektronik derart ausgebildet, mindestens ausgewählte Sensor-Pixelwerte der ersten und zweiten Messung hinsichtlich der Helligkeit zu vergleichen, wobei die Helligkeitsdifferenz mit mindestens einem Schwellwert verglichen wird, wobei bei einer Helligkeitsdifferenz kleiner dem Schwellwert ein Alarmsignal erzeugt wird. Der Grundgedanke der Erfindung ist, die LC-Glied-Eigenschaft eines Fingers auszunutzen, insbesondere die Induktivitäten. Dabei wird jedoch nicht die Impedanz gemessen, sondern durch einfachen Vergleich von Sensor-Pixelwerten bei verschiedenen Referenzspannungen festgestellt, ob dies dem Impedanzverhalten eines natürlichen Fingers entspricht. Können hingegen keine nennenswerten Helligkeitsdifferenzen festgestellt werden, so liegt ein rein ohmsches Verhalten vor, was für eine künstliche Nachbildung spricht, was dann durch das Alarmsignal signalisiert wird. Dieses Alarmsignal kann dabei nach außen sichtbar und/oder hörbar ausgegeben werden oder aber nur intern in der Auswerteelektronik verarbeitet und/oder abgespeichert werden.

In einer Ausführungsform ist die erste Referenzspannung eine Gleichspannung. Dabei kann die erste Messung zur Aufnahme des Fingerabdruckes verwendet werden, wie dies zum Stand der Technik erläutert wurde.

In einer alternativen Ausführungsform ist auch die erste Referenzspannung eine Wechselspannung, wobei die Frequenz der ersten Referenzspannung kleiner als die Frequenz der zweiten Referenzspannung ist.

Die Frequenz der Wechselspannungen ist dabei auf die Auswertefrequenz der Auswerteelektronik angepasst und vorzugsweise mindestens doppelt so groß wie die Abtastfrequenz einer Zeile. Vorzugsweise wird dabei die Wechselspannung aus einem Frequenzsignal der Auswerteelektronik erzeugt. Dabei ist weiter vorzugsweise die Frequenz der zweiten Referenzspannung ein ganzzahliges Vielfaches größer als die Frequenz der ersten Referenzspannung. Beispielsweise ist die Frequenz der zweiten Referenzspannung doppelt so groß wie die der ersten Referenzspannung.

In einer weiteren Ausführungsform ist die Auswerteelektronik weiter derart ausgebildet, Sensor-Pixelwerte einer dritten Messung mit einer dritten Referenzspannung an der Referenzelektrode auszulesen und mit den Pixelwerten der ersten und/oder zweiten Messung zu vergleichen.

In einer weiteren Ausführungsform ist die Auswertelektronik derart ausgebildet, dass in der ersten Messung Sensor-Pixelwerte ausgewählt werden, deren Helligkeit größer als ein Schwellwert ist, die dann mit den Sensor-Pixelwerten der zweiten Messung verglichen werden. Dies sind insbesondere Sensor-Pixelwerte, die den Tälern eines Fingerabdruckes zugeordnet sind. Bei den bereits helleren Pixelwerten sind die Unterschiede in der zweiten Messung erheblich deutlicher. Dabei kann weiter vorgesehen sein, dass die Pixelwerte der ersten Messung in Abhängigkeit ihrer Helligkeit klassifiziert werden und dann die einzelnen Klassen mit jeweils klassenspezifischen Schwellwerten verglichen werden.

In einer weiteren Ausführungsform ist der kapazitive Fingerabdrucksensor derart ausgebildet, dass eine interne Spannungsversorgung des Sensor-Arrays eine Basisspannung für die Referenzelektrode zur Verfügung stellt, wobei die Referenzelektrode mit der Auswerteelektronik verbunden ist, wobei die Auswerteelektronik derart ausgebildet ist, die Basisspannung in die erste oder die zweite Referenzspannung zu transformieren. Dabei ist die notwendige Hardware-Modifikation minimal. Vorzugsweise wird die Spannung der Spannungsversorgung über einen externen Widerstand zur Referenzelektrode geführt, um einen Kurzschluss der Spannungsversorgung zu vermeiden. Dabei kann die Basisspannung auch bereits die erste Referenzspannung sein, wenn diese eine Gleichspannung ist. Bei Ausführungsformen mit einer dritten Referenzspannung wird diese ebenfalls durch die Transformation der Basisspannung erzeugt. Die Transformation der Basisspannung in die Referenzspannungen erfolgt vorzugsweise durch ein getaktetes Schaltelement der Auswerteelektronik, die die Referenzelektrode getaktet gegen Masse schaltet. Dabei kann das Schaltelement auch als separates externes Bauelement wie der zuvor beschriebene Widerstand ausgebildet sein.

Hinsichtlich der verfahrensmäßigen Ausgestaltung der Erfindung wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: eine schematische Darstellung eines kapazitiven Fingerabdrucksensors in einer ersten Ausführungsform und
- Fig. 2: eine schematische Darstellung eines kapazitiven Fingerabdrucksensors in einer zweiten Ausführungsform.

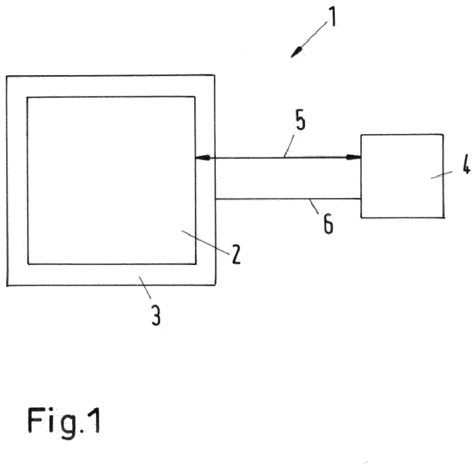

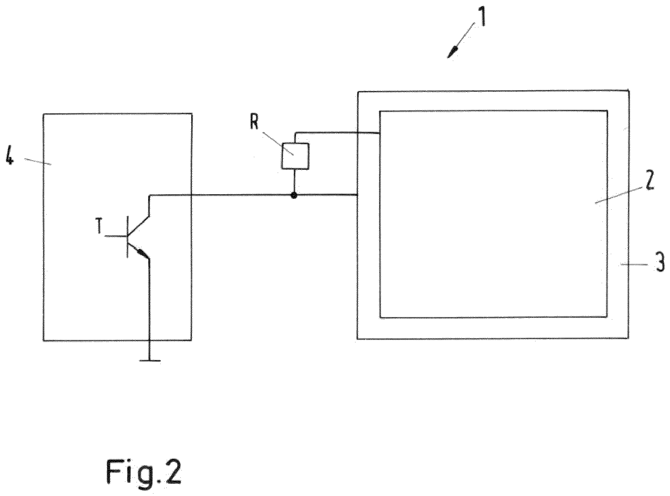

In der Fig. 1 ist schematisch ein kapazitiver Fingerabdrucksensor 1 dargestellt, der ein Sensor-Array 2, eine Referenzelektrode 3 sowie eine Auswerteelektronik 4 aufweist. Die Referenzelektrode 3 ist dabei als Rahmen um das Sensor-Array 2 angeordnet. Die Auswerteelektronik 4 ist dabei über mindestens eine Datenleitung 5 mit dem Sensor-Array 2 verbunden, um beispielsweise zeilenweise Sensor-Pixelwerte auszulesen. Hierzu übermittelt die Auswerteeinheit 4 beispielsweise Steuerbefehle, um sukzessive die Zeilen anzusprechen. Den elektronischen Sensor-Pixelwerten können dann Helligkeitswerte zugeordnet werden. Die Sensor-Pixelwerte sind dabei abhängig von der Impedanz eines Fingers sowie ob ein Berg oder ein Tal eines Fingers auf dem Pixel aufliegt. Weiter ist die Auswerteelektronik 4 über mindestens eine Versorgungsleitung 6 mit der Referenzelektrode 3 verbunden, um diese mit einer Referenzspannung zu beaufschlagen. Die Referenzspannung kann aber auch von anderen Elementen zur Verfügung gestellt werden, was anhand von Fig. 2 später erläutert wird. Nachfolgend wird jedoch davon ausgegangen, dass die Auswerteelektronik 4 die Referenzspannung zur Verfügung stellt. Die Auswerteelektronik 4 führt der Referenzelektrode 3 zur Durchführung einer ersten Messung eine Gleichspannung als erste Referenzspannung zu und liest die einzelnen Sensor-Pixelwerte aus und ordnet diesen Helligkeitswerte zu. Dabei sind die zugeordneten Pixel eines Tales heller als die Pixel eines Berges. Die Auswerteelektronik 4 ermittelt dann ausgewählte Pixel, deren Helligkeitswerte größer als ein Schwellwert sind. Diesen Pixelwerten kann dann durch Mittelwertbildung ein Helligkeitswert zugeordnet werden.

Anschließend führt die Auswerteelektronik 4 eine zweite Messung durch, wobei an die Referenzelektrode 3 eine zweite Referenzspannung angelegt wird. Die zweite Referenzspannung ist eine Wechselspannung mit einer Frequenz f2.Wieder werden die Sensor-Pixelwerte ausgelesen und Helligkeitswerte zugeordnet. Die ausgewählten Pixel der ersten Messung werden auch für die zweite Messung ausgewählt und deren Helligkeit wird auch wieder gemittelt. Anschließend wird der gemittelte Helligkeitswert der ersten Messung mit dem gemittelten Helligkeitswert der zweiten Messung für die ausgewählten Pixel verglichen. Ist die Helligkeitsdifferenz größer als ein Schwellwert, so spricht dies für einen Finger aus lebendem Gewebe, anderenfalls spricht dies für eine künstliche Nachbildung und ein Alarmsignal wird generiert.

Der Vorteil ist, dass die hardwaremäßigen Anpassungen minimal sind und sich in der Zurverfügungstellung der zweiten Referenzspannung erschöpfen, wohingegen die weitere komplette Auswertung durch Software in der Auswerteelektronik 4 erfolgt.

Alternativ kann auch die erste Referenzspannung eine Wechselspannung sein, wobei dann die Frequenz f1 kleiner als die Frequenz f2 der zweiten Referenzspannung ist. Beispielsweise ist die Frequenz f1 = 20 MHz und die Frequenz f2 = 40 MHz.

Ergänzend kann zusätzlich eine dritte Messung mit einer Wechselspannung und einer Frequenz f3 durchgeführt werden, wobei f3 > f2 ist.

In der Fig. 2 ist eine alternative Ausführungsform dargestellt, wobei aus Übersichtsgründen die Datenleitung 5 nicht dargestellt ist. Dabei wird eine Basisspannung als Gleichspannung von dem Sensor-Array 2 bzw. einer internen Spannungsversorgung des Sensor-Arrays 2 zur Verfügung gestellt und über einen externen Widerstand R an die Referenzelektrode 3 geführt. Des Weiteren ist der Widerstand R bzw. die Referenzelektrode 3 mit einem Pin der Auswerteelektronik 4 verbunden. An dessen Ausgang liegt beispielsweise ein Drain- oder Kollektoranschluss eines Transistors, dessen Emitter oder Source gegen Masse geschaltet ist. Durch Taktsignale T kann dann die Gleichspannung an der Referenzelektrode 3 in eine Wechselspannung transformiert werden. Anschaulich wird bei durchgeschaltetem Transistor die Spannung an der Referenzelektrode 3 auf Masse gezogen. Ist der Transistor gesperrt, liegt die Referenzspannung an. Die Basisspannung wird also mit der Frequenz der Taktsignale getaktet. Die zusätzliche Hardware besteht also nur in der Verbindung vom Pin der Auswerteelektronik 4 zum Widerstand R. Soll hingegen eine Gleichspannung an der Referenzelektrode 3 anliegen, so wird der Transistor einfach gesperrt. Die Auswerteelektronik 4 stellt also anschaulich Steuerbefehle zur Erzeugung der Referenzspannung zur Verfügung, wobei die Basisspannung von dem Sensor-Array 2 geliefert wird, die dann durch die Steuerbefehle in die erste Referenzspannung, zweite Referenzspannung oder dritte Referenzspannung transformiert wird.

Ein bevorzugtes Anwendungsgebiet des kapazitiven Fingerabdrucksensors ist der Einsatz in einem Wert- oder Sicherheitsdokument.

## Patentansprüche

1. Kapazitiver Fingerabdrucksensor (1), der mindestens ein Sensor-Array (2), mindestens eine Referenzelektrode (3) und mindestens eine Auswerteelektronik (4) aufweist,
**dadurch gekennzeichnet, dass**
die Auswerteelektronik (4) derart ausgebildet ist, Sensor-Pixelwerte einer ersten Messung mit einer ersten Referenzspannung an der Referenzelektrode (3) auszulesen und Sensor-Pixelwerte einer zweiten Messung mit einer zweiten Referenzspannung auszulesen, wobei mindestens die zweite Referenzspannung eine Wechselspannung ist, wobei die Auswertelektronik (4) weiter derart ausgebildet ist, mindestens ausgewählte Sensor-Pixelwerte der ersten und zweiten Messung hinsichtlich der Helligkeit zu vergleichen, wobei die Helligkeitsdifferenz mit mindestens einem Schwellwert verglichen wird, wobei bei einer Helligkeitsdifferenz kleiner dem Schwellwert ein Alarmsignal erzeugt wird.

2. Kapazitiver Fingerabdrucksensor nach Anspruch 1, **dadurch gekennzeichnet, dass** die erste Referenzspannung eine Gleichspannung ist.

3. Kapazitiver Fingerabdrucksensor nach Anspruch 1, **dadurch gekennzeichnet, dass** die erste Referenzspannung eine Wechselspannung ist, wobei die Frequenz der ersten Referenzspannung kleiner als eine Frequenz der zweiten Referenzspannung ist.

4. Kapazitiver Fingerabdrucksensor nach einem der vorangegangenen Ansprüche, **dadurch gekennzeichnet, dass** die Auswerteelektronik (4) derart ausgebildet ist, Sensor-Pixelwerte einer dritten Messung mit einer dritten Referenzspannung an der Referenzelektrode auszulesen und mit den Pixelwerten der ersten und/oder zweiten Messung zu vergleichen.

5. Kapazitiver Fingerabdrucksensor nach einem der vorangegangenen Ansprüche, **dadurch gekennzeichnet, dass** die Auswerteelektronik (4) derart ausgebildet ist, dass in der ersten Messung Sensor-Pixelwerte ausgewählt werden, deren Helligkeitswert größer als ein Schwellwert ist, die dann mit den Sensor-Pixelwerten der zweiten Messung verglichen werden.

6. Kapazitiver Fingerabdrucksensor nach einem der vorangegangenen Ansprüche, **dadurch gekennzeichnet, dass** der kapazitive Fingerabdrucksensor (1) derart ausgebildet ist, dass eine interne Spannungsversorgung des Sensor-Arrays (2) eine Basisspannung für die Referenzelektrode (3) zur Verfügung stellt, wobei die Referenzelektrode (3) mit der Auswerteelektronik (4) verbunden ist, wobei die Auswerteelektronik (4) derart ausgebildet ist, die Basisspannung des Sensor-Arrays (2) in die erste Referenzspannung oder die zweite Referenzspannung zu transformieren.

7. Verfahren zur Erfassung eines Fingerabdrucks mittels eines kapazitiven Fingerabdrucksensors (1), der mindestens ein Sensor-Array (2), mindestens eine Referenzelektrode (3) und mindestens eine Auswerteelektronik (4) aufweist, aufweisend folgende Verfahrensschritte:
- Anlegen einer ersten Referenzspannung an die Referenzelektrode (3),
- Durchführen einer ersten Messung und Auslesen der Sensor-Pixelwerte durch die Auswerteelektronik (4),
- Anlegen einer zweiten Referenzspannung an die Referenzelektrode (3), wobei die zweite Referenzspannung eine Wechselspannung ist,
- Durchführen einer zweiten Messung und Auslesen der Sensor-Pixelwerte durch die Auswerteelektronik (4),
- Vergleichen mindestens von ausgewählten Sensor-Pixelwerten der ersten und zweiten Messung hinsichtlich der Helligkeit, wobei eine Helligkeitsdifferenz gebildet wird,
- Vergleichen der Helligkeitsdifferenz mit mindestens einem Schwellwert,
- Erzeugen eines Alarmsignals, wenn die Helligkeitsdifferenz kleiner als der Schwellwert ist.

8. Wert- oder Sicherheitsdokument, **dadurch gekennzeichnet, dass** das Wert- oder Sicherheitsdokument einen kapazitiven Fingerabdrucksensor (1) nach einem der Ansprüche 1 bis 6 aufweist.
